# EUROPEAN PATENT SPECIFICATION

(11) **EP 3 133 328 B1**
(45) Date of publication and mention of the grant of the patent: **08.04.2020**
(21) Application number: 16001789.3
(22) Date of filing: 11.08.2016
(51) Int. Cl.: F16L 11/118, B65D 63/00, B60P 7/08

(54) **ANNULAR-PLEATED CIRCULAR BRAID**
RINGFÖRMIGES PLISSIERTES RUNDES GEFLECHT
TRESSE CIRCULAIRE ANNULAIRE PLISSÉE

(30) Priority: 20.08.2015 US 201514831313
(43) Date of publication of application: 22.02.2017
(73) Proprietor: Ragner Technology Corporation, Gainesville, Florida 32609 (US)
(72) Inventor: Ragner, Gary Dean, Gainesville, Florida 32607 (US)
(74) Representative: Samson & Partner Patentanwälte mbB

(56) References cited:
- WO-A1-95/13495
- US-A1- 2015 007 902
- US-A1- 2015 041 016

## Description

### BACKGROUND OF INVENTION

The disclosed technology can be used to implement hollow braided covers, and more specifically to hollow braided covers that extend lengthwise when an extending longitudinal force is applied, and retract lengthwise when a retracting longitudinal force is applied.

### BACKGROUND - PRIOR ART

The present state of the art linearly extendable and retractable hoses includes both spring biased and elastic biased hoses. Prior art designs seen in US Pat. No. 8,291,941 and US Pat. No. 8,479,776 comprise two connector ends with an inner elastic tube and an inelastic outer cover. The outer cover and the inner elastic tube are connected at one end to an inlet connector (source connector) and connected at their other end to an outlet connector. The inelastic outer cover is generally unattached, unbonded, and unsecured to the inner elastic tube between the two connector ends. The outer covers comprise a braided or woven nylon, polyester or polypropylene, and/or other braided or woven material. The braided or woven outer cover is designed to not expand radially or longitudinally so that, the actual length and width of the outer cover determines the maximum length and maximum width of the hose in its expanded condition. Thus, this final length and diameter of the non-elastic outer cover is the final diameter and the final length of the extendable and retractable hose when it is in its expanded condition and in use to transport or deliver a fluid. These prior art elastic hoses also have covers that maintain the same wall thickness in both the extended and retracted positions. This means that the outer cover must fold when hose retracts.
US 2015/041016 A1 discloses a tube according to the preamble of the independent claim 1.

### SUMMARY

The disclosed technology can be used to create an annularly pleated circular braid that allows for much greater extension ratios than are currently possible with a standard braided cover. This is because the annular pleats on the braided cover allow the braided fabric to compress more compactly longitudinally. The disclosed annularly pleated circular braid can be used to implement both bungee cords and self-extending hoses with expansion ratios well over 6-to-1. The disclosed technology can also be used to implement elastic extendible and retractable hoses **30, 40** and **50** (bungee hoses) and bungee cords **60** and **63,** which can comprise a pleated bungee-like outer cover **36** to provide greater extension ratios, better environmental wear resistance (i.e. friction with ground) and/or lower stresses between inner elastic tubes **34** and **44,** and outer cover **36.** Unlike prior art outer cover **26** which defines a maximum length and a maximum width (diameter), the disclosed outer cover **36** can extend and contract lengthwise (longitudinally), and also expand and contract width-wise (radially).

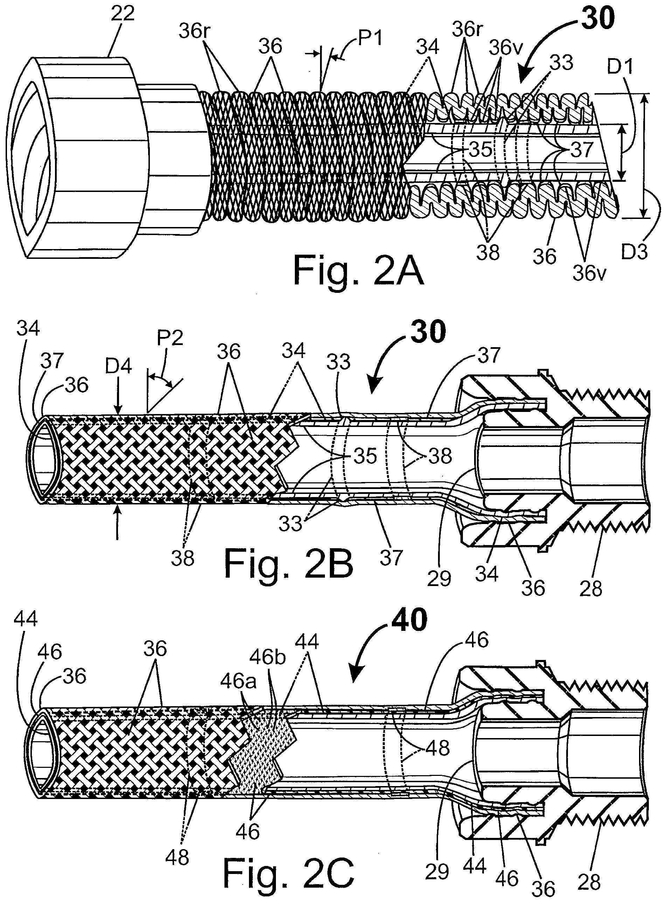

The disclosed elastic retractable and extendible pressure hoses **30, 40** and **50** will also be referred to in this document as an "elastically retractable pressure hose", "elastic retractable hose", "retractable hose", "elastic bungee hose", "bungee hose", and possibly other similar terms. These bungee hose designs can be implemented with an outer cover **36** that has significantly different properties and structure from prior art outer covers. For example, outer cover **36** can be braided, knitted, woven, and/or wrapped so that it can widen radially when it is longitudinally retracted and constrict radially when longitudinally lengthened. This means that outer cover **36** may have neither a well-defined maximum length, nor a well-defined maximum diameter (width). Outer cover **36** seen in **Figs. 2A-B**, comprises a braided fabric tube that can comprise fibers or yarns **36a-b** made of fibers (e.g., high strength fibers such as nylon fibers, polyester fibers, polypropylene, cotton, combinations of different fibers, etc.). The length and width of such an outer cover **36** may depend on tensions and pressures exerted on the retractable hose, both from the interior and exterior of the hose. Thus, the length and diameter of the disclosed retractable hoses **30, 40** and **50** can change depending on the user applied tensions on the exterior and the fluid pressures exerted on the interior of hoses. Thus, while prior art retractable hoses may extend to a predetermined maximum length and/or maximum width, outer cover **36** can be designed to be stretchable during use and may be adapted to be stretched significantly even after reaching an apparent maximum length from fluid pressure alone.

Outer cover **36** can have a similar structure to the braided cover on prior art bungee cords or shock cords commonly found today. Outer cover **36** and bungee cord covers can extend and retract with their inner elastic cores (which could be, for example, an elastic tube or a set of one or more elastic cords) without the need for significant folding or unfolding of the outer cover material, or significant motion between the elastic inner core and the outer cover. However, to achieve significant expansion ratios for the hoses disclosed herein, a controlled pleating of the outer cover can be used. Thus, outer cover **36** can be designed to fold and compress into evenly spaced and like-sized annular ridges **36r** (pleats) along its length when retracted. This can provide an improved appearance for the elastic retractable hose in its retracted position when compared to prior art retractable elastic hoses which generally fold into a haphazard jumble of folded fabric along its length. Like a bungee cord, outer cover **36** can be designed to increase in diameter and thickness as it retracts longitudinally to provide a smooth transition between extended and retracted lengths. The result is that an outer cover **36** such as disclosed herein can provide a substantially even and smooth exterior for retractable hoses **30, 40** and **50** when fully retracted and provide a finished and an esthetically pleasing look to bungee hoses **30, 40** and **50.**

The outer ridges **36r** of cover **36** can also be coated with a wear resistant material to create wear rings **39.** This can provide a more durable exterior surface for cover **36,** and also help cover **36** consistently return to its pleated retracted shape. Outer cover **36** can also have a wall thickness that can thicken as cover **36** is retracted and thin as cover **36** is extended lengthwise (extend longitudinally). These properties of outer cover **36,** where they are present, can provide retractable hoses **30, 40** and **50** with the feel of a bungee-cord both when extended and retracted, as well as providing other benefits, such as a better esthetic appearance when retracted, greater extension to retracted length ratios, and the ability to use higher denier yarns to improve the wear resistance of outer cover **36.** Also an outer cover **36** can be implemented to have the ability to move and expand with inner elastic tubes **34** and **44,** which can reduce wear on the outer surface of elastic tube **34** and **44** thereby increasing the useful life of hoses **30, 40** and **50.**

### OBJECTIVES AND ADVANTAGES

Accordingly, several objects and advantages which can be obtained using various embodiments of the disclosed technology are:
To provide a hollow or circular braided tube with annular pleats formed along a longitudinal length of the braided tube.
To provide a hollow or circular braided tube adapted to form annular pleats along its length when shortened to a retracted position.
To provide a hollow or circular braided tube with annular pleats that are heat set into yarn used to form the braided tube.
To provide a hollow or circular braided tube with annular pleats that are heat set into yarn used to form the braided tube, wherein the heat set comprises melting the outer annular ridges of the pleats.

### DRAWING FIGURES

**Fig. 1A** Prior Art elastic retractable hose input end (faucet connector end).
**Fig. 1B** Prior Art elastic retractable hose output end (nozzle connector end).
**Fig. 2A** Elastic retractable stretch hose with a retractable braided outer cover (retracted), as disclosed in prior art document US 2015/041016 A1.
**Fig. 2B** Elastic retractable stretch hose with a retractable braided outer cover (expanded), as disclosed in prior art document US 2015/041016 A1.
**Fig. 2C** Elastic retractable stretch hose with a double retractable braided outer cover (expanded), as disclosed in prior art document US 2015/041016 A1.
**Fig. 3A** Elastic retractable stretch hose with a plurality of wear resistant ring bonded to the braided outer cover at the ridges of the circular pleats formed when retracted, as disclosed in prior art document US 2015/041016 A1.
**Fig. 3B** Elastic retractable stretch hose with wear resistant rings bonded to the braided outer cover (expanded), as disclosed in prior art document US 2015/041016 A1.
**Fig. 4A** Elastic bungee cord comprising a pleated braided cover around an inner elastic tube.
**Fig. 4B** Elastic bungee cord comprising a pleated braided cover and an inner solid elastic cord.
**Fig. 5A** Bungee hose **30** with outer pleated cover **36** being heat set, in accordance with the present invention.
**Fig. 5B** Bungee hose **30** with outer pleated cover **36** heat set with melted sections **77** according to the present invention.

### DEFINITION OF TERMS

FULLY RETRACTED LENGTH or Retracted Length - this should be understood as, for a Bungee hose (retractable hose) and the components disposed along its length (e.g., outer cover **36**, inner elastic tube **34**, etc) the length of the hose or those components when they are fully retracted (i.e., when there is substantially no fluid pressure within its elastic tube and a minimal amount of external tension on the bungee hose itself).

EXTENDED LENGTH - this should be understood as, for a retractable hose and the components disposed along its length, the length the hose or those components extend to when the hose is pressurized with a fluid and no extension forces are applied other than fluid pressure.

FULLY EXTENDED LENGTH - this should be understood as, for a retractable hose and the components disposed along its length, the length to which the hose or components return when (1) an external pressure which stretched the hose to its Maximum Stretched Length (defined infra) has been removed and (2) there is a differential between ambient pressure and pressure for fluid inside the hose sufficient to extend the hose at its extended length. In general, the Fully Extended Length for a given hose or component will be greater than the Extended Length for that same hose or component, due to resistance exerted by the components of the hose to fully returning to the Extended Length. The differential between Fully Extended Length and Extended Length for any particular hose will largely be based on the friction between the components making up the hose. For lubricated hoses the Fully Extended Length might only be a few percent longer than the Extended Length, while for nonlubricated hoses, the Fully Extended Length might be up to fifteen percent (or more) longer than the Extended Length .

MAXIMUM STRETCHED LENGTH - this should be understood as, for a retractable hose and the components disposed along its length, the length of the hose (or components) when the hose has reached the approximate maximum length to which it can safely be stretched. In most cases this is significantly beyond the Fully Extended Length of the bungee hose (e.g., the Maximum Stretched Length could exceed the Extended Length by 25% or more, while the Fully Extended Length will generally only be 10-15% longer than the Extended Length). For example, in a recent bungee hose prototype, the prototype bungee hose had a Fully Retracted Length of four feet, and would grow to approximately twelve feet from water pressure alone (its Extended Length). After the user pulled on the end of the prototype hose and released it, the prototype bungee hose would maintain a length slightly over thirteen feet (its Fully Extended Length). However, the user could then pull on the end of the bungee hose and stretch it out to twenty feet using about two-hundred Newton (forty-five pounds) of force (tension). This might be considered its Maximum Stretched Length, since greater tension could cause the hose to exert a retractive force which could be high enough to be unsafe for the user, even though the breaking strength of the prototype hose's outer cover was over 2,000 Newton (approximately five-hundred pounds) and more force could be applied to lengthen the hose slightly further. However, application of tension force beyond two-hundred Newton will only slightly further increase the length of the hose and is thus a reasonable force to create a maximum stretched length.

PITCH ANGLE - this should be understood as the angle between the longitudinal axis of fibers comprised by an outer cover and the transverse direction for that cover (transverse direction is shown as vertical in **Figs. 2A-C**). The transverse direction can also be defined as the direction perpendicular to the longitudinal axis of the hose). In a case where the outer cover of a hose folds into a pleated shape when the hose is at its Retracted Length, this Pitch Angle can be found by following a single fiber from one ridge to the next and finding the angle they inscribe around the hose.

### DETAILED DESCRIPTION OF THE INVENTION

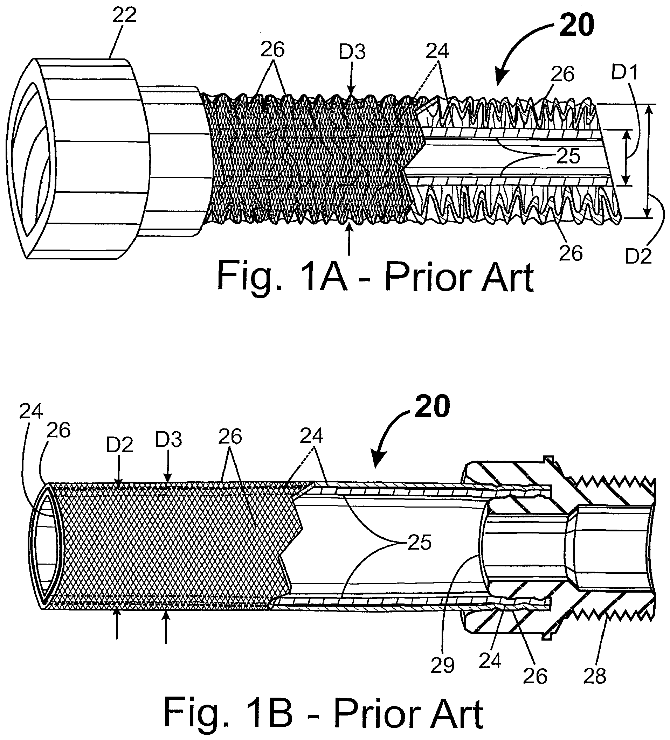

In **Fig. 1A-B**, we see a perspective section view of a prior art retractable stretch hose **20** (retractable pressure hose). **Fig. 1A** shows hose **20** in its relaxed state (depressurized), while **Fig. 1B** shows hose **20** in its pressurized operational state. Retractable hose **20** comprises an inner elastic hose **24** (inner elastic tube), a woven reinforcement outer cover **26**, an inlet connector **22**, and an outlet connector **28**. An inlet connector **22** is attached to one end of both the inner elastic tube **24** and outer cover **26,** and outlet connector **28** is connected to the other end of inner elastic tube **24** and outer cover **26.** Inner elastic tube **24** and outer cover **26** are only attached (secured) at the connectors and are free to slide longitudinally with respect to one another between connectors **22** and **28.** Inlet connector **22** is designed to attach to a standard residential water faucet. Outlet connector **28** is designed to connect to a spray nozzle or other garden hose nozzle which acts as a flow restriction device to increase pressure within the hose to expand it. Outlet connector **28** also includes its own flow restriction ridge **29** to increase internal pressure that helps expand elastic tube **24.** When water pressure is released, the pressure inside retractable hose **20** can return to atmospheric pressure and the elastic nature of elastic tube **24** pulls hose **20** back to its retracted state seen in **Fig. 1A****.**

In **Figs. 1A-B**, outer cover **26** comprises a tube-shaped reinforcement that is composed of woven high-strength fibers, and designed to have a predefined length and width (diameter) and to support the operating pressure conducted within inner elastic tube **24.** Outer cover **26** comprises a relatively thin wall of woven fibers so that during retraction outer cover **26** can fold and crumple to a shorter length. Outer cover **26** maintains substantially the same wall thickness when crumpled to the retracted length of hose **20.** Outlet connector **28** comprises a flow restriction ridge **29** to generate pressure within interior channel **25** of elastic tube **24.** Inner elastic tube **24** extends through reinforcement outer cover **26** where the natural length of inner elastic tube **24** is about one-third the natural length of woven outer cover **26.** Inner elastic tube **24** has a natural outside diameter **D1** (no stress), and outer reinforcement cover **26** has a natural inside diameter **D2** (not crumpled). Outside diameter **D1** of elastic tube **24** is approximately one-half the inside diameter **D2** of outer cover **26.** This difference in diameter between **D1** and **D2** is to allow significant longitudinal extension of the retractable hose **20** before the elastic tube **24** is forced up against the interior surface of outer cover **26.** This helps protect the inner elastic tube from being over extended by the expanding outer cover when pressurized. Both inner elastic tube **24** and outer cover **26** are cylindrical in shape and when elastic tube **24** is pressurized from within with a liquid and/or a gas, elastic tube **24** is forced to expand both radially and longitudinally against outer cover **26**. In this extended position, as seen in **Fig. 1B**, outer cover **26** has an inside diameter **D2** and an outside diameter **D3**. In prior art elastic retractable hoses, the thickness of outer cover **26** determines the difference between diameters **D2** and **D3,** with thicker outer covers used to provide more wear resistance. The thickness of outer cover **26** is substantially fixed as it extends and retracts, and outer cover **26** folds the tube shaped outer cover **26** when it retracts as seen in **Fig. 1A****.** Prior art elastic retractable hoses are designed with outer cover **26** having a maximum diameter and fixed longitudinal length for the hose when pressurized (see prior art in U.S. Pat. No. 8,291,941 and U.S. Pat. No. 8,479,776). Thus when prior art elastic retractable hoses similar to elastic retractable hose **20** are used, the internal pressure within inner tube **24** can straighten the folds in outer cover **26** and extend it to its maximum length (fully extended length) and also expand it radially to its maximum diameter (smooth cylindrical exterior) as seen in **Fig. 1B**. Once fully inflated and extended, outer cover **26** is designed to have a predetermined length and width (diameter). To provide this fixed maximum diameter and maximum length for outer cover **26**, prior art elastic retractable hoses use a woven, or braided fabric cover that has longitudinal yarns running lengthwise to provide a maximum length for the outer cover, and one or more radial yarns that are substantially aligned with the circumference of the outer cover to provide a maximum diameter for the outer cover.

In **Figs. 2A**, and **2B**, we see elastic retractable stretch hose **30** (bungee hose), as disclosed in prior art document US 2015/041016 A1, comprising an inlet connector **22**, an inner elastic tube **34** with a plurality of annular ridge protrusions **33** (optional), a stretchable reinforced outer cover **36**, an outlet connector **28,** a lubricant **37**, and one or more bonding rings **38** (optional) for bonding elastic tube **34** to outer cover **36.** **Fig. 2A** shows bungee hose **30** in its relaxed state, while **Fig. 2B** shows bungee hose **30** in its pressurized state. **Fig. 2A** shows the inlet end of bungee hose **30**, while **Fig. 2B** shows the outlet end of hose 30. Inner elastic tube **34** is inserted within hollow braided outer cover **36.** Inlet connector **22** and outlet connector **28** are securely connected to opposite ends of inner elastic tube **34** and outer cover **36**. Inlet connector **22** is designed to connect to a pressurized fluid source or compressed gas source. Inlet connector **22** is designed to transfer fluid (liquid or gas) to an interior channel **35** of elastic tube **34**. Outlet connector **28** is designed to transfer fluid (liquid or gas) from interior channel **35** to an external nozzle or other device. Outlet connector **28** is connected to inner elastic tube **34** and outer cover **36** on the opposite end from inlet connector **22**, and designed to connect to various nozzles or applicator attachments. Outlet connector **28** is designed to direct fluids or gasses within elastic tube **34** to flow past flow restriction ridge **29** and out the end of bungee hose **30** (see **Fig. 2B**). Flow restriction ridge **29** helps build pressure within elastic tube **34** to extend hose **30** for use.

In **Figs. 2A-B**, annular ridges **33** (annular rings) can be part of inner elastic tube **34** or an attached component. Bonding rings **38** are positioned between elastic tube **34** and outer cover **36** and bond the two components together to provide an even distribution of the outer cover along elastic tube **34**. This even distribution helps prevent high stress spots in elastic tube **34** when hose **30** is extending due to internal pressure. Both annular ridges **33** and bonding rings **38** (adhesive rings) can be broken into smaller segments or dots to provide the same functions (e.g., holding outer cover **36** in place, so that cover **36** has the proper distribution on elastic tube **34**; causing the outer cover **36** to fold in a regular pleated manner by constraining bonded portions of the outer cover **36** to fold inward when the hose **30** is contracted; causing the outer cover **36** to fold in a regular pleated pattern by encouraging portions of the outer cover over an annular ring **33** or other protruding structure to fold outward; etc). Preferably, either ridges **33** or rings **38** are periodically positioned along the length of bungee hose **30** with a spacing of one ring every two feet or closer when the hose **30** is at its Extended Length. In implementations of the disclosed technology in which ridges **33** and/or bonding rings **38** are present, they can be spaced more widely (i.e., separated by more than two feet when the hose **30** is at its Extended Length), but this can reduce the effectiveness of these holding rings at maintaining the position of outer cover **36**.

In **Figs. 2A-B**, inner elastic tube **34** comprises a tube-shaped body with a plurality of optional annular protrusions along its length. Without protrusions **33**, elastic tube **34** can be similar to elastic tubes **24** and **44**. Elastic tubes **34** and **44** can be made from any of a number of different elastic materials such as natural rubber, synthetic rubbers, thermal set elastomers, elastic thermal plastics, etc. Many specific polymers and polymer mixtures can exist in each of these elastomer categories. The outside diameter **D1** of elastic tube **34** will preferably be chosen so that it gently supports yarns **36a-b** on the interior of outer cover **36** when retracted (e.g., by being slightly smaller than, or approximately the same as, a desired inside diameter of the outer cover **36** when retracted). This gives tube **34** room to slide within outer cover **36** while also providing internal support for outer cover **36** so that the exterior of cover **36** can have a relatively smooth cylindrical shape (e.g., a pleated shape made up of regular valleys and ridges) when retracted. Protrusions **33** are part of elastic tube **34** and comprise annular rings protruding radially outward from the main elastic tube body. Outer cover **36** can deform slightly to accommodate protrusions **33**, which helps hold outer cover in place when hose **30** is retracted. Protrusions **33** can also comprise protruding dots or segments instead of complete rings. The protrusions in each case can help reduce stresses on inner elastic tube **34** by resisting shifting of outer cover **36** with respect to elastic tube **34** when hose **30** is retracted and not in use. This holding of outer cover **36** in place with respect to inner elastic tube **34** can also be accomplished with bonding rings 38 that use an adhesive to bond tube **34** and cover **36** together.

As stated previously, in **Figs. 2A-B**, protrusions **33** are optional, as are bonding rings **38**, and the functions described for those components can be omitted or provided in manners which do not require inclusion of protrusions **33** or bonding rings **38**. To illustrate, consider that, instead of (or in addition to) using protrusions **33** and/or bonding rings, an outer cover can be made self adjusting through selection of the elastic tube diameter **D1**, retracted outer cover diameter **D3**, and denier of yarns **36a-b**. For example, the denier of yarns **36a-b** and diameter **D3** of outer cover **36** can be selected with respect to the diameter **D1** of the elastic hose, so that when hose **30** is retracted, outer cover **36** would tend to form into a longitudinal column of stacked circular pleats (annular ridges **36r** and annular valleys **36v**) that has an interior surface that fits loosely around inner elastic tube **34**. This longitudinal compression of cover **36** would create a small spring like force in the compressed yarns **36a-b** that would tend to evenly space out outer cover **36** on tube **34** if shifted out of place by the user. That is, the longitudinal forces in the compressed outer cover **36** will tend to shift outer cover **36** back into place. The selection of smaller denier yarns **36a-b** can allow a more compressed position, and thus allow greater expanded to retracted length ratios for hoses **30**, **40** and **50**.

In **Figs. 2A-B**, outer cover **36** can comprise high strength fibers and/or yarns **36a-b** that are braided, knitted, woven and/or wrapped into a tube-shaped reinforcement that can support the pressure introduced into inlet connector **22** and inner elastic tube **34** or **44**. Yarns **36a** and **36b** on outer cover **36** are braided in opposite directions in this example, with yarns **36a** wrapping around cover **36** in the left-handed direction and yarns **36b** wrapping around cover **36** in the right-handed direction. As yarns **36a-b** wrap around cover **36** they are woven in and out of each other (braided) to produce a hollow braided structure that can expand and contract both radially and longitudinally because of the pitch angle of yarns **36a-b**. The hollow nature of outer cover **36** allows it to accept elastic tubes **34** and **44** into its interior for the assembly of the bungee hose. The braided nature of outer cover **36** can also allow it to create substantially evenly spaced and like-sized annular ridges **36r** along its length when retracted, as seen in **Fig. 2A****.** This compressed structure can have nearly tangentially oriented yarns providing outer cover **36** with the ability to stretch or expand longitudinally.

With bungee hose **30** in its retracted position, as seen in **Fig. 2A**, yarns **36a-b** are angled at a small pitch angle **P1** of approximately ten degrees. Pitch angle **P1** can be modified within a range of approximately five degrees to twenty degrees depending on the needed extension ratio for the bungee hose. For bungee hose **30**, this pitch angle **P1** is approximately ten degrees relative to the transverse direction of hoses **30**. Thus, when in use, outer cover **36** is designed to stretch longitudinally when yarns **36a-b** are tilted to various larger pitch angles (see pitch angle **P2** in **Figs. 2B-C**) and/or as the outer cover **36** unfolds. This increasing pitch angle of yarns **36a-b** means that outer cover **36** is expanding longitudinally along with inner elastic tube **34**. Because fluid pressure within a hollow cylindrical tube (hose) produces twice the transverse tension (hoop tension) in its skin as it does in the longitudinal direction, the pitch angle of the yarns reach equilibrium around a pitch angle of thirty degrees (Tan (30) = 1/2). Thus, when being extended by internal pressure alone, the pitch angle of yarns **36a-b** is likely to stop at an angle slightly below thirty degrees (Extended Length).

When additional tension is added (e.g., as a result of pulling by the user) to bungee hoses **30**, **40** or **50**, the pitch angle of yarns **36a-b** can increase to intermediate pitch angle **P2** and beyond. Pitch angle **P2** is greater than the pitch angle of approximately **30** degrees which bungee hoses **30**, **40** or **50** would achieve when extended by internal pressure alone (i.e., when extended to their Extended Length), but less than the angle such hoses would achieve when extended to their Maximum Stretched Length. The yarns **36a-b** can then be held at an intermediate pitch (i.e., when extended to the Fully Extended Length) even after the additional tension is released (e.g., when a user stops pulling) as a result of friction between the yarns **36a-b** and the elastic tube **34** and between the yarns **36a-b** themselves. For example, prototype hoses have been produced using circular braided tubes for an outer cover **36** made up of yarns having pitch angles of approximately ten degrees when retracted. With a ten degree yarn pitch angle, the prototype hoses were able to expand to a fully extended length of approximately three times their retracted length. Prototypes that had their outer cover compressed even further (even smaller pitch angles from the transverse direction) were able to achieve fully extended lengths greater than four times their retracted length without a stretching force on the hose. When continuously pulled on (stretched) by the user, these prototype hoses easily reached five to six times their retracted lengths during use.

As hose **30** (and hoses **40** and **50**) are extended, outer cover **36** tends to go from a larger diameter **D3** to a smaller diameter **D4**. Diameter **D4** can be significantly smaller than diameter **D3** so that inner elastic tube **34** does not have to expand much radially when pressurized. The angle of yarns **36a-b** causes this shrinkage in diameter to happen because of straightening out of the yarns when they are pulled longitudinally. As the pitch angle of yarns **36a-b** increases, the diameter of outer cover **36** decreases. With fluid pressure within elastic tube **34**, elastic bungee hoses **30**, **40** and **50** are easily stretchable by the user simply pulling on the end. This pulling action can further reduce the diameter of outer cover **36** below diameter **D4**. As outer cover shrinks in diameter, inner elastic tube **34** must also reduce in diameter. Because elastic tube **34** decreases in diameter as the bungee hose is extended, the overall strain within elastic tube **34** is less than if outer cover **36** did not decrease in diameter. Thus, this type of bungee hose can easily reach high expansion ratios without rupturing. Using the disclosed technology, a bungee hose can be implemented which can easily be stretched an additional thirty percent further than its Fully Extended Length simply by being pulled on. This can provide a very stretchable feel, similar to a bungee cord.

In outer cover **36**, the denier of the yarn used to form the outer cover influences the ultimate compression ratio in the longitudinal direction, because the yarns can more easily pile up on one another if they are smaller in cross-section. Note that when yarns **36a-b** are being compressed in the longitudinal direction, they also tend to expand in the radial direction. During this radial expansion, the radial thickness of outer cover **36** can remain relatively constant for particular ranges of expansion and contraction. As yarns **36a-b** are angled closer to the transverse direction (smaller pitch angle), the yarns tend to define a larger diameter on their exterior while at the same time the yarns can define a smaller interior diameter as cover **36** is longitudinally compressed (retracted). In prototype designs, the interior diameter of the outer cover was closely matched with the outside diameter of the inner elastic tube. A small amount of space was left between the inner elastic tube and the pleated outer cover to allow the outer cover to slide freely over the elastic tube. This arrangement provided a well organized and smooth exterior to the prototype hoses when retracted.

Retractable hoses **30**, **40** and **50** can have a similar structure with the proper dimensions of outer cover **36**, and inner elastic tube **34** or **44**. With the correct size of inner elastic tube **34** and outer cover **36**, combined with a gentle longitudinal compressive force from the elastic tube (elastic tube **34** length chosen to match compressed length of outer cover **36**), then a smooth outer surface can be formed on outer cover **36** with the exterior of elastic tube **34** gently supporting the interior surface of outer cover **36** when retracted. The retracted position seen in **Fig. 2A** also shows that outer cover **36** can be compressed into evenly spaced and like-sized annular ridges **36r** along its length. With the proper combination of diameters and lengths for tube **34** and cover **36**, retractable hoses **30**, **40** and **50** can have a smooth even exterior that provides a far superior visual appearance compared to prior art retractable hoses. The braided, knitted, woven, and/or wrapped structure of outer cover **36** tends to expand radially when it is longitudinally retracted, and tends to contract radially when the outer cover is longitudinally extended.

In **Fig. 2B**, we can see that outer cover **36** comprises yarns **36a-b** which are braided in and out of each other around a circular path to form the hollow braided reinforcement cover **36**. Yarns **36a** progress through outer cover **36** in a left handed spiral path while yarns **36b** progress along a right handed spiral path. In **Fig. 2A**, these individual yarns are compressed longitudinally causing all the yarns to be angled nearly vertically (five to twenty degrees from vertical, pitch angle). Preferably, in an implementation following **Fig. 2A**, the braided yarns **36a-b** in outer cover **36** can form evenly spaced annular ridges **36r** along the outer surface of retractable bungee hoses **30**, **40** and **50** when retracted. Yarns **36a-b** will preferably be made from a strong material, such as polypropylene, nylon, polyester, cotton, etc. Yarns **36a-b** can comprise many strands of material or a single strand filament. Multi-strand yarns can be twisted and untwisted yarns, multiple multi-strand yarns, etc. Yarns **36a-b** can also comprise flat strips, textured strips, and other strands of various cross-section, etc. Different yarn types will produce different outer covers with different properties for specific uses. For example, yarns **36a-b** might comprise a thin rectangular cross-section monofilament, or large denier untwisted multi filament yarns. Both can be woven into a bungee cord like patterns to make outer cover **36**. This gives the retracted hose seen in **Fig. 2A** a clean smooth appearance.

In the extended position seen in **Fig. 2B** and **2C**, outer cover **36** is extended longitudinally and individual yarns can be seen angled at nearly at forty-five degrees from the transverse direction (perpendicular to the longitudinal axis of the hose). The yarns wrap in both directions and weave in and out of each other to provide a stable tubular shaped reinforcement that can expand and contract longitudinally and radially. The construction of outer cover **36** can be very similar to a Chinese finger tube where one can insert a finger in each end of the toy which longitudinally compresses the toy and expands it radially so the user's fingers slide inside the tube. When the user tries to pull their fingers out they stretch the braided structure of the tube causing it to tighten radially on their fingers. The bungee hoses disclosed here can be implemented to function similarly but with elastic tubes **34** and **44** having the ability to change diameter more easily than a person's fingers. Thus, bungee hoses **30**, **40** and **50** can stretch and contract lengthwise in response to tension and pressure on the hose.

In **Figs. 2A-B**, lubricant **37** is coated on the interior surface of outer cover **36**. Lubricant **37** can be coated on the interior of outer cover **36** before elastic tube **34** is inserted and connectors **22** or **28** are connected to their ends. Lubricant **37** can be infused though outer cover **36** to coat elastic tube **34** and the interior surfaces of outer cover **36**. Lubricant **37** is designed to reduce friction and wear on elastic tube **34** as the elastic tube slides within cover **36** during extension and retraction of hose **30**. Care should be taken during assembly so that lubricant **37** is not scraped all to one end of retractable bungee hose **30.** An even coating of lubricant **37** will preferably be provided along the full length of hose **30**. Lubricant **37** can be applied to elastic tube **34** before assembly. Various solid and liquid lubricants can be used to reduce friction between elastic tube **34** and outer cover **36**. Because of the porous nature of outer cover **36**, lubricant placed on outer cover **36** is less likely to be scraped off or shifted within retractable hose **30** during assembly. Many other methods of applying the lubricant can be used to get the lubricant between elastic tube **34** and outer cover **36**. The fibrous nature of outer cover **36** tends to keep the lubricant from being dispersed into the environment.

In **Fig. 2C**, we see a second example of a elastic retractable stretch hose **40** (bungee hose), as disclosed in prior art document US 2015/041016 A1, comprising an inlet connector **22**, a stretchable outer cover 36, an inner elastic tube **44**, a second stretchable reinforced middle cover **46**, a plurality of optional bonding rings **48**, and an outlet connector **28**. Inlet connector **22**, outer cover **36** and outlet connector **28** can be the same as seen in bungee hose **30** and perform the same operational functions. Bungee hose **40** however, also includes a second stretchable middle cover **46** placed between elastic tube **44** and outer cover **36**. Middle cover **46** can have substantially the same structure as outer cover **36** and be made of similar yarn material. In some designs, middle cover **46** might be made of cotton to provide a soft low-friction surface for elastic tube **44** to rest against when inflated. If middle cover **46** is made with a significantly finer denier yarn than outer cover **36**, it can have a tighter braided pattern as shown, which can provide a smoother interior surface for contact with elastic tube **44.** Outer cover **36**, middle cover **46** and elastic tube **44** are inserted one inside the other to form a three layer hose, with connector **22** and **28** bonded to all three layers on the inlet and outlet ends, respectively of bungee hose **40**.

In **Fig. 2C**, middle cover **46** is drawn with approximately twice as many yarns as outer cover **36**, and can have approximately half the radial thickness of outer cover **36** because of the smaller denier yarns used. The pitch angle of yarns **36a-b** in cover **36** and yarns **46a-b** making up cover **46** can have substantially the same pitch angle at all lengths of the hose (though with different angles at different lengths) to help insure a smooth transition between the retracted and extended positions, and between the extended and retracted positions. However, the smaller denier of yarns **46a-b** of middle cover **46** can have a significantly smaller pitch angle if desired because of the greater compression that can be achieved with smaller diameter yarns **46a-b** (or fibers). Yarns **46a-b** are shown in **Fig. 2C** with a pitch angle of about thirty degrees, which means they are near their fully extended length, while yarns **36a-b** of outer cover **36** are shown with a pitch angle of about forty-five degrees, which means it has been stretched well past its equilibrium length (Extended Length, near thirty degree pitch angle). In alternate designs, many other combinations of pitch angles and yarn denier can be used for the reinforcement covers **36** and **46** and can be used to provide the desired bungee hose properties.

In **Fig. 2C****,** pitch angle of yarns **46a-b** of middle cover **46** at about thirty degrees, while yarns **36a-b** in outer cover **36** are at approximately forty-five degrees. This difference in pitch means that the middle cover **46** is just reaching equilibrium between radial and longitudinal tensions while outer cover **36** would be resisting this extended length. Thus, covers **36** and **46** could be fighting each other in the direction they want to change length from internal fluid pressure. However, if the inside diameter of outer cover **36** is slightly larger than the outside diameter of middle cover **46** at a particular length, then most of the radial and longitudinal forces will be carried by middle cover **46** not outer cover **36.** Instead outer cover **36** could rest loosely around middle cover **46** and provide wear protection for cover **46**. This can allow bungee hose **40** to have a significantly longer fully extended length than the pitch angle on outer cover **36** would suggest. Middle cover **46** could extend to its extended length (yarn pitch angle approximately thirty degrees) and also extend outer cover **36** to the same length. Because very little radial force is exerted on outer cover **36**, the longitudinal extension created by middle cover **46** also extends cover **36**, and its yarns **36a-b** can be pushed past their equilibrium pitch angle of approximately thirty degrees.

In **Fig. 2C**, outer cover **36** is shown bonded to middle cover **46** by bonding rings **48**. These bonding rings **48** are optional and need not be used in any specific bungee hose design. However, when used, bonding rings **48** will preferably lock covers **36** and **46** together at periodic points. Also, bonding rings similar to bonding rings **38** can be used to bond elastic tube **44** to middle cover **46** if desired. The width of these bonding rings can be relatively narrow so that elastic hose **44** is free to stretch longitudinally. Because elastic tube **44** can stretch both radially and longitudinally, bonding rings **38** and **48** can be made of an elastomer adhesive so that they can stretch with the elastic tube. In alternate designs, bonding rings **38** and **48** can comprise an elastomer ring with adhesives on its inner and outer surfaces. These adhesives on the interior and exterior of the elastomer rings do not have to be the same and can be specifically tailored to bond to the surface it is going to be attached to.

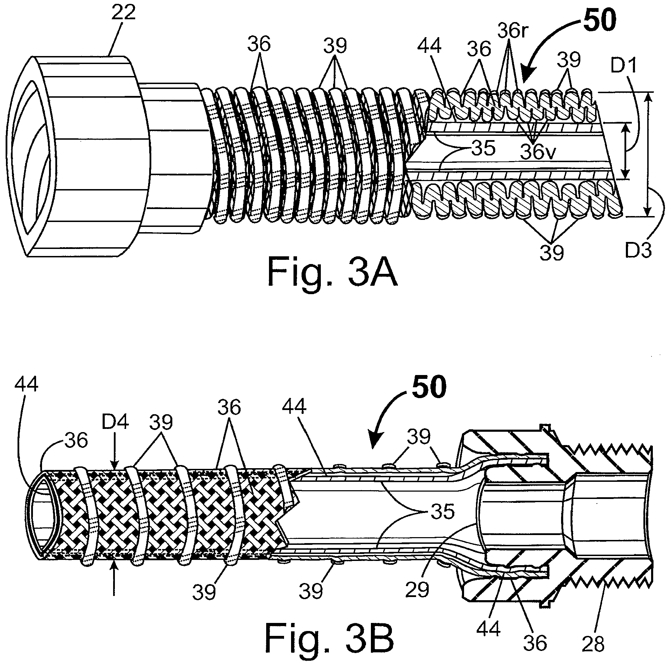

In **Figs. 3A**, and **3B**, we see elastic retractable stretch hose **50** (bungee hose), as disclosed in prior art document US 2015/041016 A1, comprising an inlet connector **22**, an inner elastic tube **44**, a stretchable reinforced outer cover **36**, an outlet connector **28**, and one or more wear resistant rings **39** for protecting outer cover **36** from wear against external surfaces such as the ground, and/or other functions such as controlling contraction of the hose **50** as described herein. Connector ends **22** and **28**, and outer cover **36** can be substantially the same as previously seen in bungee hoses **30** and **40**. Inner elastic inner tube **44** can be constructed similar to the other inner elastic tubes seen in this patent, but is shown here with a simple tubular shape without protrusions or bonding zones. Wear rings **39** can comprise a polymer ring bonded securely to the outer surface of cover **36**. The polymer material that makes up rings **39** can be made of either hard or soft polymers to provide wear protection. If wear rings **39** comprise an elastic polymer then rings **39** can stretch and shrink in diameter with cover **36** as hose **50** is stretched and relaxed. If a harder polymer is used, such as polypropylene, a thinner coating (thin radial thickness) and/or sporadic thicker portions can be used to allow rings **39** to flex during extension and retraction.

**Fig. 3A** shows bungee hose **50** in its relaxed state, while **Fig. 3B** shows bungee hose **50** in its pressurized and extended state. Inner elastic tube **34** is inserted within hollow braided outer cover **36**. Inlet connector **22** and outlet connector **28** are securely connected to opposite ends of inner elastic tube **34** and outer cover **36**. Inlet connector **22** is designed to connect to a pressurized fluid source or compressed gas source and then transfer that fluid (liquid or gas) to an interior channel **35** of elastic tube **34**. Elastic tube **44** can comprise any of a number of elastic materials, such as latex rubber, thermal plastic urethane, synthetic rubbers, thermal set elastomers, thermal plastic elastomers and other elastic materials. Outer cover **36** can be the same as discussed previously and can comprise a high-strength braided tube that can fold into radial pleats to provide a large extended-to-retracted length ratio. Wear resistant rings **39** can comprise a wear resistant elastomer or other wear resistant polymers that can bond to the outer surface of cover **36** on exterior ridges **36r** of the retracted outer cover.

Wear rings **39** can provide dimensional stability to hose **50** which tends to return outer cover **36** to the same retracted configuration when pressurized and depressurized over and over again (e.g., if the combined length of the wear rings **39** is greater than the length the hose **50** would take when depressurized in the absence of the rings, then the combined length of the rings can place a limit on the hose's ability to retract, and the outer surfaces could, when the hose **50** is at its retracted length, provide an unbroken barrier between the outer cover **36** of the hose **50** and the surrounding environment). When hose **50** is extended, wear rings **39** protrude outward away from the surface of outer cover **36** to protect cover **36** from wear against surfaces such as pool decks, driveways, sidewalks, etc. Outlet connector **28** is designed to transfer fluid (liquid or gas) from interior channel **35** to an external nozzle or other device that provides a restriction to the flow of fluid through hose **50.** Outlet connector **28** is connected to inner elastic tube **34** and outer cover **36** on the opposite end from inlet connector **22,** and can be designed to connect to various nozzles or applicator attachments. Outlet connector **28** can be designed with a flow restriction ridge **29** to restrict fluid flow (gas or liquid) out of hose **50** and helps build pressure within elastic tube **34** to extend hose **50** for use.

In **Fig. 3B**, notice that wear rings **39** protrude outward from cover **36**, both when bungee hose **50** is retracted and when it is extended. This provides the wear rings with first contact with most flat surfaces to protect the softer yam that is comprised by outer cover **36**. The natural outside diameter **D1** of elastic tube **44** will preferably be chosen so that it gently supports outer cover **36** on the interior when retracted. This gives tube **44** room to slide within outer cover **36** while also providing internal support for outer cover **36**. This allows the exterior of cover **36** to have a relatively organized cylindrical shape when retracted. Wear rings **39** tend to provide support for the outer ridge of cover **36** to maintain a diameter **D3** when retracted, which is significantly larger that the operational diameter **D4** of bungee hose **50** (see **Fig. 3B**)**.** The size of diameter **D4** can change depending on how much longitudinal tension is placed on the bungee hose. As hose **50** is stretched, the outside diameter **D4** of cover **36** gets smaller, and as that stretching force is released bungee hose **50** tend to increase in diameter back to diameter **D4**. If rings **39** are made of an elastic material, then rings **39** will also tend to spring back out from their smaller compressed diameter (seen in **Fig. 3B**) to their larger stowed diameter (seen in **Fig. 3A****).** This elastic expansion outward of rings 39 helps ensure the folding of cover **36** is controlled so that the same pleated structure is formed properly each time the hose is retracted. Finally the reader should understand that lubrication **37** (film, layer or coating), ridges **33**, adhesive strips **38** and other structures disclosed in this patent can be combined and used with bungee hose **50**.

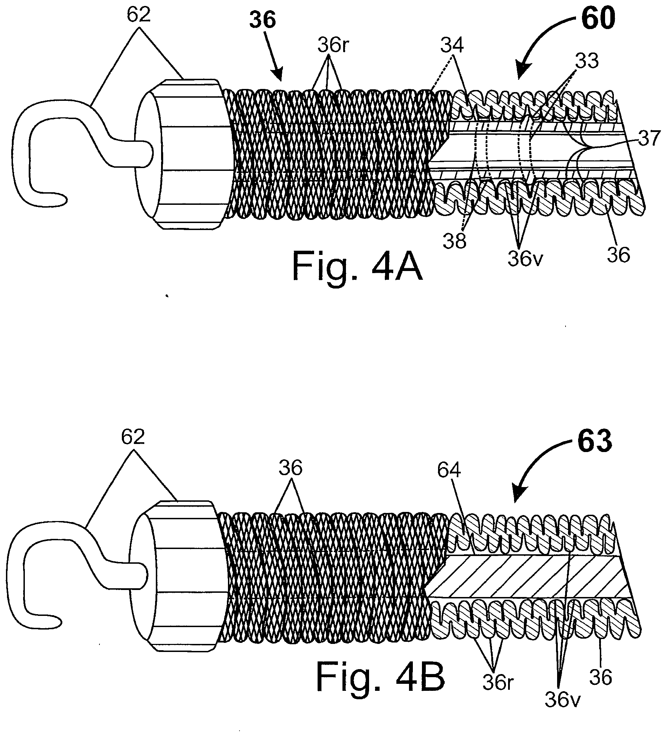

Pleated outer cover **36** can also be used as a bungee cord cover to allow the elastic cords inside to be stretched more than six times their original length. In **Figs. 4A-B**, we see bungee style tie-downs developed by the inventor for use in tying or securing items for travel. Prior to the development of the longitudinally pleated braid, Bungee Cords were limited to approximately 2X (two times their retracted length). Now with the longitudinally pleated braid, 6X or more expansion is possible for a bungee style tie-down. This allows a one-foot long elastic cord, made with the disclosed longitudinal pleating technology, to stretch up to six feet to tie down items like a bungee cord. Various types of inner elastic core can be used in this type of implementation, and **Fig. 4A** shows the elastic core provided by elastic hose **34,** and **Fig. 4B** shows the elastic core provided by solid elastic cord **44.** In alternate designs, solid elastic cord **44** can be replaced with multiple smaller elastic cords as is common practice in bungee style cord manufacturing.

In **Figs. 4A-B**, we see bungee cords **60** and **63** using pleated cover **36** to obtain a high stretched-to-retracted length ratio. Bungee cord **60** comprises previously discussed elastic tube **34** and pleated braided cover **36**. Both elastic tube **34** and braided cover **36** are attached to bungee cord hook end **62** at one end and attached to a similar hook end at their other ends. Ribs **33** and lubricant **37** are optional. Bungee cord **63** comprises previously discussed pleated braided cover **36** and a solid core elastic band **64**. Bungee cord hook end **62** is attached to one end of both braided cover **36** and elastic band **64** and a second hook end (not shown) similar to hook end **62** is attached to the other ends of braided cover **36** and elastic band **64.**

In **Figs. 4A-B**, we see two bungee cords **60** and **63**, respectively comprising hook ends **62**, a pleated outer cover **36** and an elastic core comprising either elastic hose **34** or solid core **64**, respectively. In **Fig. 4A****,** bungee cord **60** is seen comprising the hose portion of elastic retractable hose **30** (see **Figs. 1A-B**) with hose ends **22** and **28** replaced with bungee cord ends **62**. Ridges **33**, lubricant **37** and bonding rings **38** are optional for the functional operation of bungee cord **60**. The use of pleats in braided cover **36** allows a substantially greater retraction ratio for outer cover **36** when compared to prior art braided bungee cord covers. With a pleated outer cover like cover **36**, bungee cords can have extension ratios of six-to-one (600% of original length).

In **Fig. 4B**, bungee cord **63** is very similar to bungee cord **60** except it uses a solid core elastic **64**. While solid core elastics are used for bungee cords, more often multiple strands of elastic are used with braided outer covers to provide a more reliable bungee cord. The single strand cord **64** is shown here in **Fig. 4B** because it is easier to draw than a typical multi-strand bungee cord core that might comprise dozens of longitudinal elastic strands. The reader should understand that the same braiding processes used to make a single cord pleated cover bungee cord can also be used to make multi-strand elastic bungee cord. Ends **62** can be the same on both ends of the bungee cords, or modified for specific purposes. Multiple types and styles of bungee cord ends can be seen in the prior art and nearly any type or style of bungee cord ends can be attached and used with this pleated cover style of bungee cord.

In **Figs. 4A-B**, pleat ridges **36r** have been heat set into the outer cover **36** so that it tends to form the annular pleats as shown when retracted. Setting the shape of the pleats can contribute to the stable operation of pleated braided cover **36**. In embodiments where the pleats' valleys **36v** and/or ridges **36r** are not stabilized on cover **36**, the pleated cover can be at greater risk of losing its orderly shape and not retracting properly. Several methods can be used to stabilize the pleats, such as: 1) bonding a polymer material to fibers and/or yarns **36a-b** at ridges **36r** on cover **36** (see **Figs. 3A-B**), 2) heat setting fibers and/or yarns **36a-b** with high temperature air, 3) heat setting fibers and/or yarns **36a-b** with an open flame, 4) heat setting fibers and/or yarns **36a-b** with a hot surface (iron), 5) heat set fibers and/or yarns **36a-b** with radiant heat (infrared, light, etc.), 6) heat setting fibers and/or yarns **36a-b** with steam and 7) heat setting fibers and/or yarns **36a-b** with other less common heating methods. More than one of these stabilizing methods can be used together on a single cover. For example, high temperature air might be used together with infrared heaters to achieve the desired pleat set. Similarly, high temperature air might be used to set the pleats and then a polymer coating applied to the ridges to further stabilize the pleats for long term use.

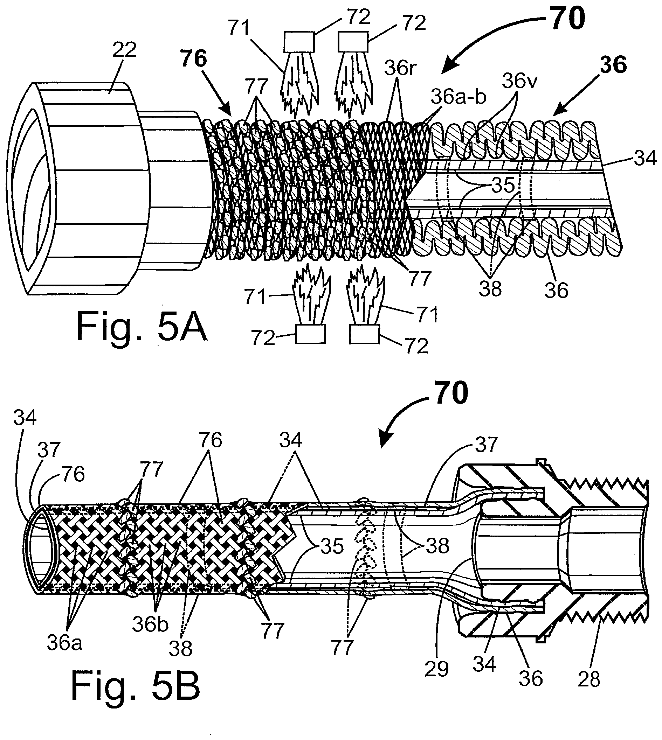

In **Fig. 5A**, elastic hose **70** can be substantially the same as extendible and retractable hose **30** seen previously, but, in accordance with the present invention, with the heat set comprising a plurality of melted surface portions **77** on ridges **36r** of cover **36**. In **Fig. 5A**, pleated outer cover **36** as discussed previously (see right side of **Fig. 5A**), is in the process of being transformed into heat set pleated outer cover **76** (see left-side of **Fig. 5A**). Open flames **71** coming from multiple burner nozzles **72** are used for heat setting the shown annular pleated portions **77** into braided cover **36** and forming heat set braided cover **76**. Burner nozzles **72** can be placed completely around the cover **36** (only top and bottom burner nozzles **72** shown) so that heat is evenly dispersed across the surface of ridges **36r** on the cover **36**. In this example, annularly pleated braided cover **36** is moving passed burner nozzles **72** from right to left, with cover **36** slightly extended from its fully retracted position so that ridges **36r** are not strongly forced together by elastic tube **34**. Burner nozzles **72** can use various fuels to produce flames **71**, such as, propane, butane, methane, ethanol, methanol and other gaseous and liquid fuels that can produce a stable flame **71**. The plurality of melted surface portions **77** are formed as exposed surfaces of braided cover **36** pass through burner nozzles **72** and flames **71**. The flames can heat those exposed exterior surfaces to the melting point of the material comprising cover **36** (i.e., polypropylene, nylon, polyester, polyethylene, etc.) melting yarns **36a-b** together to form portions **77** on heat set pleated braid **76**.

As the burner nozzles **72** direct their flames **71** across the outer surface of pleated cover **36**, the intense heat from the high temperature flames **71**, may require only a fraction of a second to melt the outer surface of ridges **36r** and form the plurality of melted surfaces **77** on the exposed portions of yarns **36a-b**. During this melting process, the interior portions of pleated braided cover **36** can remain relatively cool compared to ridges **36r**. Braided cover **36** can be slightly extended longitudinally from its fully compressed (fully retracted) position during the melting process so that ridges **36r** do not significantly touch their neighbors on either side. With cover **36** slightly longitudinally extended in this way, flames **71** tend to cool quickly as they passes through the narrow gap between pleats (between ridges **36r**) and tend not to provide sufficient heat to bond the sides of the pleats together where the pleats might be lightly touching each other.

Each of the yarns **36a-b** can comprise many individual filaments that can be twisted together or untwisted. In **Fig. 5A**, this melting and partial bonding of yarns **36a-b** can take place primarily between these smaller filaments within individual yarns **36a-b**. Thus, with the correct amount of heating, the exposed surfaces of yarns **36a-b** may melt their yarn filaments together forming a plurality of hard surface shells **77** on the surface of yarns **36a-b** at ridges **36r**. These surface shells or melted zones **77** can form on a particular yarn, and may or may not be bonded strongly to their neighboring surface shells **77** on another yarn. This weak bonding between adjacent surface shells allows braided cover **76** to remain relatively flexible even though the outer surface of the ridges are heavily melted. This melting of the yarn surfaces prevents yarns **36a-b** from sliding too far from their original pleated positions during use, and thus provides a stable pleated braid that can hold its shape even after heavy use.

In **Fig. 5B**, we see elastic hose **70** pressurized and extended for use with cover **76** and elastic tube **34** taking on a cylindrical hose shape. Hose **70** comprises substantially the same structure as hose **30**, but, in accordance with the present invention, also defines a plurality of melted portions **77** forming annular rings spaced evenly along the length of hose **70.** Melted portions **77** tend to resist forming a perfect cylinder with the rest of pleated cover **76** and tends to return to their pleated ridge positions when hose **70** is depressurized and returned to its longitudinally retracted position for storage. If braided cover **76** with melted ridge portions **77** where installed on bungee cords **60** or **63** (replacing cover **36**), melted portions **77** would function substantially the same way as they do in elastic hose **70** and tend to return ridges **36r** to their original retracted positions after cover **76** was stretched for use.

### ADHESIVES

As the reader should understand from the previous discussions, the use of bonding agents, bonding structures, and adhesives for bonding specific components of the disclosed bungee pressure hoses together can be useful for a hose's proper operation and durability. However, the composition of these bonding materials, and the positioning, shaping and applying of the bonding structures can vary greatly. For example, the bonding structures (bonding rings **38**) used to bond inner elastic tube **34** to outer cover **36** can take the form of bonding strips that follow a spiral path, small segments (short strips), or small dots that are periodically positioned along the hose, or even random patterns of bonding patches or pads (not shown, see bonding rings 38 and **48** if segmented). During manufacturing, these bonding structures and/or adhesives can be first applied to the inner elastic tube, or outer cover, and/or to additional components to form structures such as bonding rings **38**, bonding rings **48**, bonding pads (not shown), or bonding dots (not shown). The bonding materials can also be applied before, during or after the construction of particular parts of the retractable hose. Further, the bonding structures can also be applied in a non-adhesive state to the inner elastic tube, and/or outer cover and then later, after assembly, be activated to bond these components together to complete the retractable hose. The bonding agents themselves (plus any support structures) can comprise a very diverse set of materials, including, but are not limited to, adhesives, polymer adhesives, UV cured adhesives, thermally cured adhesives, chemically cured adhesives, flexible thermal polymers, soft elastomers, foamed polymers and/or elastomers, etc. Finally, the bonding structures and bonding agents can comprise the actual hose structure itself, in which case, no additional bonding structures or adhesives are needed (e.g., linear elastic tube is thermally and/or mechanically bonded to the outer cover).

### INNER ELASTIC TUBE CONSTRUCTION

In **Figs. 1A** through **3B** and **5A** through **5B**, elastic tubes **24**, **34**, and **44** can be made of an elastic material (elastomer) formed into a tube shape for transporting a fluid or gas. Elastic tubes **34** and **44** can have the same structure as elastic tube **24** if desired. Inner elastic tubes **24**, **34**, and **44** are shown with significant elastic properties that can allow them to stretch up to seven times their original length when placed under stress. The wall thickness and diameters of elastic tubes **34** and **44** can be varied in relationship to outer cover **36** to provide the desired operation (extending and retracting) of the retractable hose. The elastic material used to make tubes **34** and **44** can be the same elastic material used in prior art elastic tube **24** and can comprise any of a number of presently available elastomers, rubbers, and other materials with elastic properties. Elastic tubes **34** and **44** can be made from material including, but is not limited to, natural latex, synthetic latex, thermal set plastics, thermal set elastomers, thermal plastic elastomers, thermal plastic urethane, butylene rubber, etc. The specific elastomer used will depend on the specific use for that particular hose and its particular operational environment. The extension ratio of the elastomer from its natural length will depend on the particular use of the retractable hose. For use as a garden hose, a stretch of three hundred percent (3X) or more is desirable. Thermal set polymer materials have a big advantage over thermal plastics because they tend to return to the same shape they started even after being stretched for long periods of time or experiencing higher temperature. Thus, the low creep of thermal set plastics allows a longer useful life of the disclosed elastically retractable hoses. Thermal plastic elastomers tend to lose a significant portion of their elasticity when stretched and heated and may not return to their original retracted length.

### MANUFACTURING METHODS - Figs. 1A through 5B

In **Fig. 1A-B** we see prior art elastic-biased stretch hose **20** (retractable hose), which can be manufactured in a number of ways. For example, elastic tube **24** and outer cover **26** can be made separately with elastic tube **24** then being slid inside cover **26** and connectors **22** and **28** being bonded to each of their ends. Alternatively, elastic tube **24** can be made separately and outer cover **26** woven around elastic tube **24** to form the hose section. Elastic tube **24** defines an interior channel **25** for conveying fluids or gases entering through inlet connector **22** and exiting through outlet connector **28** seen in **Fig. 1B**. Retractable hose **20** can include a flow restricting ridge **29** as seen on outlet connector **28**. Since the natural length of outer cover **26** is considerably longer than the natural length of inner elastic tube **24**, outer cover **26** will be longitudinally compressed when hose **20** is collapsed, and elastic tube **24** will be longitudinally stretched to the length of outer cover **26** when extended. A mandrel system can be used to facilitate these assembly processes.

In **Figs. 2A** through **3B**, woven outer cover **36**, and inner elastic tubes **34** and **44** are used in retractable hoses **30**, **40** and **50**, which can be assembled similar to above described stretch hose **20**. Other methods are possible, where reinforcement outer cover **36** can be braided directly onto elastic tube **34** which is made separately. Lubricant **37** can be coated onto the exterior of elastic tube **34** and/or interior surface of outer cover **36** before elastic tube **34** is pulled through interior channel passageway **35** of cover **36**. Inlet connector **22** and outlet connector **28** can then be connected to each end of elastic tube **34** and outer cover **36**. The introduction of lubricant **37** between elastic tube **34** and cover **36** reduces the friction between their surfaces and provides smaller friction forces and less wear on elastic tube **34**.

In **Figs. 3A** and **3B**, wear rings **39** can be formed on the ridges of braided outer cover **36** by a number of methods. A few of these methods include spraying on a liquid polymer while cover **36** is retracted and then quickly partially extending the cover longitudinally to separate the liquid into rings, rolling outer cover **36** in a hot polymer bath to coat the ridges and separating into rings, rolling hot polymer onto outer cover **36** to form rings **39**, extruding wear rings **39** onto the ridges of outer cover **36**, while cover **36** is fully retracted coating the entire exterior of cover with a wear resistant polymer which is then cut between ridges to form rings **39**, etc.

Lubricant **37** can be a liquid lubricant, a solid lubricant, and/or a mixture of solid and liquid lubricants. Solid polymer powders or small beads can also be used as a solid lubricant. Some lubricant examples include, but are not limited to oils, paraffin wax, wax mixtures, other soft polymers, Teflon, graphite, solid polymer coatings, elastomer coatings, etc. These lubricants **37** can be coated on the interior of outer cover **36**, on the fibers of outer cover **36**, and/or on the exterior of inner elastic tubes **24**, **34**, and **44**. Liquid lubricants can be applied from the exterior through outer cover **36** to coat the inside surface of cover **36** because of the porous nature of outer cover. Solid lubricants, like paraffin wax, that can be melted, can also be applied to the exterior of outer cover **36** and allowed to wick through the fabric of cover **36** and/or be forced through cover **36** to its interior surface by a number of methods (e.g., application of a compressed gas).

Of the lubricants tested so far, paraffin candle wax has worked the best. The soft solid nature of paraffin provides a smooth lubrication between the two surfaces, and does not wash away or drain away during use, nor while not in use. Wax also easily wicks into the fabric of cover **36** when heated to its melting point. Wax and other lubricating polymers can also continue to provide protection even after hundreds of hose extension and retraction cycles. Waxes may also be combined with other ingredients or additives to make the wax have various other properties. By adding additional ingredients or additives, a wax or soft polymer can be made sticky and/or gooey so that it can shift with the inner elastic tube and/or outer cover, while at the same time help hold the inner hose in a particular position when the hose is retracted. These sticky and/or gooey polymers can operate as a weak adhesive, providing weak bonding between the elastic tube and outer cover to maintain their relative position during operation. These sticky and gooey polymers can be tailored to slide easily when a small constant force is applied (acting like a thick lubricant) while at the same time resisting strong fast forces to act like an adhesive. Other additives might be used to increase the melting temperature (warmer climates) of the wax or soft polymer, and in other situations be used to reduce the melting temperature (colder climates). Other lubricating solid polymers can comprise polymers that can be bonded to the fibers of outer cover **36** and also make a low friction contact interface with the outer surface of the elastic tubes (i.e., elastic tubes **24**, **34**, and **44**). The lubricant may also comprise a solid lubricant that is coated on the yarn or fibers that make up outer cover **36** before outer cover **36** is woven or braided.

Pleated covers **36** and **76** can be manufactured by first braiding a round braid tube with a circular braiding machine, or other similar machine, then pleating the braided tube with repeating annular pleats and the setting the shown pleated shapes by heat setting, coating with polymers, and/or using other shape holding methods. Once, pleated covers **36** and **76** have a set shape, as shown in **Figs. 2A**, **3A**, **4A**, and **5A**, then elastic materials of various kinds can be inserted into the covers and attached to their appropriate end connectors to form retractable hoses (i.e., **30**, **40** and **70**) or bungee cords (i.e., **60** and **63**). A special method of heat setting cover **36,** in accordance with the present invention, is shown in **Fig. 5A**, where outer ridges **36r** are seared by open flame to partially melt yarns **36a-b** and form pleated cover **76**. The melted portions **77** provide a means for holding yarns **36a-b** in place with respect to each other and provide a robust ability for the yarns to return to their original pleated shape as seen in **Fig. 5A** after being repeatedly extended for use (see **Fig. 5B**).

The manufacturing of pleated outer cover **76** seen in **Figs. 5A-B** can be accomplished in several ways. One method is shown in **Fig. 5A**, where a finished hose similar to extendible and retractable hose **30** is passed through a burner chamber comprising burner nozzles **72** such that flames **71** contact the outer ridge surfaces **36r** of cover **36** heating these surfaces to the melting point of yarns **36a-b**. Protective covers can be placed over hose ends **22** and **28** if they are made of plastic, so that these ends are not damaged as the hose passes through flames **71** and multiple melted portions **77** are created on ridges **36r.** A second method of producing pleated outer cover **76** can be to send only pleated cover **36** through a burner chamber comprising burner nozzles **72** with flames **71** to produce melted portions **77.** Both these above methods can substitute a high temperature heated air and/or radiant heaters (IR and visible-light heaters) for burner nozzles **72** as the heat source.

In tests, a very-high temperature heat gun, produced sufficiently hot air, at greater than 1400 degrees Fahrenheit, and radiant heat to produce melted portions **77**, on a pleated cover similar to cover **36**, that were nearly indistinguishable from melted portions **77** produced by a propane flame. In some designs quickly heating the exterior of cover **36** is important to properly melting of portions **77** without heating and shrinking the valley portions of the cover. Slower heating can cause excessive heating of underlying portions of pleated cover **36** which can tend to cause yarns **36a-b** (and cover **36**) to shrink significantly and can also make the resulting pleated braid stiff. Thus, heating of portions **77** can be done quickly to prevent shrinkage of fibers **36a-b**. Heated air, and burned gasses, cool quickly as they pass between the small closely-packed fibers of cover **36**, but if heat is applied for more than about one-half a second, the heat begins to penetrate deeper into cover **36** and starts to cause the interior portions of the fibers to begin to shrink. When this interior shrinkage happens there is nothing to support the outer ridges and the entire cover **36** tends to shrink in diameter. This shrinkage can cause problems if the shrinkage of cover **36** was not taken into account for the final product. Ideally, only the outer ridge is heated sufficiently for the fibers to shrink and/or melt so that the underlying fibers can support the outer ridge and help resist the shrinkage of fibers there. For pleated braid about 0.80 inches in outside diameter, the dwell time for the heated air or gasses should kept below one second to prevent significant shrinkage. Ideally for most nylons and polyesters heating times under one-half second can be used to keep shrinkage minimal. However, temperatures should be high enough to melt the outer ridge and form melted portions **77** during this one-half second or less of heat. This can require relatively high temperatures above about 1500 degrees Fahrenheit. Thus, in many cases the heating of melted portions **77** should be done very quickly before hot gasses, flame, or radiant heat have time to penetrate deeper into braided cover **36** and cause excessive shrinkage.

In **Figs. 5A-B**, melted portions **77,** because of their hardened nature, have the ability to hinder the normal changes in response to extension forces of the pitch angle of the fibers at those locations. Thus, when measuring the pitch angle of fibers **36a-b,** measurements should be taken between the rings formed by melted portions **77** where fibers **36a-b** are undamaged and unimpeded by melted fibers.

### OPERATIONAL DESCRIPTION -- Figs. 1A through 3B

In **Figs. 1A-B**, prior art retractable hose **20** is seen with inner elastic tube **24**, which has a relatively thick wall to provide strength to resist water pressure and resist friction against outer cover **26**. The outside diameter **D1** of elastic tube **24** is approximately half the diameter **D2** of outer cover **26** so that elastic tube **24** does not begin to press significantly against the interior surface of outer cover **26** until considerable internal pressure is already applied. The smaller diameter **D1** of elastic tube **24** also allows retractable hose **20** to extended significantly in the longitudinal direction before expanding to the diameter **D2** (inside surface of cover **26**, see **Fig. 1B**). This prevents significant friction from forming between elastic tube **24** and outer cover **26** until after retractable hose **20** is partially extended. Restriction **29** produces a back pressure within elastic tube **24** to increase internal pressure and extend the hose fully. Nozzle accessories (not shown) which can be attached to outlet connector **28** can provide additional back pressure to extend hose **20**. As pressure increases within elastic tube **24**, tube **24** presses up against folded portions of outer cover **26** and the hose continues to expand longitudinally. As pressure further increases, elastic tube **24** presses up against the interior surface of outer cover **26** which can cause outer cover **26** to form creases and not reach its full length without cover **26** sliding across the surface of elastic tube **24** to reach its full length. This sliding of surfaces creates wear and reduces the useful life of the hose. When water pressure is removed, the elastic biasing tension in elastic tube **24** causes retractable hose **20** to retract and force the water out of elastic tube **24**.

Before we go further in the discussion of bungee hoses **30**, **40** and **50** please review the section marked "Definition of Terms" in this document for the definition of a few special terms used in describing bungee hoses. In **Figs. 2A-B**, retractable hose **30** is seen in its collapsed and extended states, respectively. In its collapsed state, as seen in **Fig. 2A****,** elastic tube **34** is substantially relaxed with cover **36** folded and compressed longitudinally around tube **34**. A retractable hose can be manufactured so that outer cover **36**, when in this retracted position, will tend to fold and compress (pleat) into evenly spaced and like-sized annular ridges **36r** along its length. For example shaping the outer cover **36** into the desired pleated pattern, then heat pressing it to set the pleated shape into the yarn fibers (either in combination with, or as an alternative to, other approaches described herein for achieving the described pleated pattern, such as designing the inner hose to have an outer diameter in its retracted state which gently supports the valleys in the pleated shape to be taken by the outer cover). In a stretched state, as seen in **Fig. 2B**, outer cover **36** and inner elastic tube **34** is shown stretched by a user to a length for retractable hose **30** that is beyond its "fully extended length" (see definitions section). The nature of outer cover **36** can provide it with the ability to substantially fold evenly into tightly packed, evenly spaced, and like-sized annular ridges as it is longitudinally compressed (retracted) to provide a relatively smooth and even outer surface that is esthetically pleasing. Some portions of yarns **36a-b** tend to fold inward to form valleys **36v** and some portions tend to fold outward to form exterior ridges **36r**. A properly designed hollow circular braid can form evenly spaced points on outer cover **36** that wants to fold in or out naturally, and thus outer cover **36** can be designed to collapse evenly in a corrugated pattern around elastic tubes **34** and **44** without additional structures. The addition of wear resistant rings **39** as seen in **Figs. 3A-B** can further force the outer cover to take on this pleated or corrugated shape when retracted.

In **Figs. 2A-B**, as water pressure is introduced into connector **22** and inner channel **35**, elastic tube **34** begins to expand longitudinally and radially. The interior of outer cover **36** is easily deformed and begins to take on a cylindrical shape. As pressure increases, elastic tube **34** begins to press against outer cover **36**, and eventually straightens outer cover **36** into a cylindrical shape tube. As elastic tube **34** is forced against outer cover **36**, lubricant layer **37** helps reduce friction and chaffing of elastic tube **34** on outer cover **36**. Once inner elastic tubes **34** and **44** have pressed outer cover **36** into a cylindrical shape, elastic tube **34** and outer cover **36** can then expand together as bungee hoses **30**, **40** and **50** continue to extend lengthwise as internal pressure increases. Outer cover **36** can smooth-out and lay flat against inner elastic tube **34** long before the bungee hose reaches its extended length. As more pressure is applied, bungee hoses **30**, **40** and **50** continue to lengthen as outer cover **36** continues growing longitudinally with inner elastic tubes **34** and **44**, respectively. Once full contact is made between tube **34** and cover **36**, further extension of elastic tube **34** and outer cover **36** produces very little sliding of tube **34** with respect to outer cover **36**. However, lubricant **37** can provide a low friction surface interface between tube **34** and cover **36** to slide allow them to slide with respect to each other. Lubricant **37** can help reduce wear of elastic tube **34** as it slides with respect to cover **36** by reducing stresses on tube **34**. Solid lubricants such as paraffin wax are particularly good at reducing wear and also reducing friction between elastic tube **34** and a woven outer cover **36.** The wax tends to remain within cover **36** during long term use and in tests actually appears to work better and better as the wax is worked into the fibers of cover **36.**

In **Fig. 2C**, bungee hose **40** can operate in substantially the same way that retractable bungee hose **30** operates. The addition of a middle cover **46** can change the "extended length" of bungee hose **40** compared to bungee hose **30**, but would still expand and contract with elastic tube **44** similar to bungee hose **30**. Lubrication **37** (film, layer or coating) is not used here because a reinforcement middle cover **46**, similar to outer cover **36**, is positioned between outer cover **36** and elastic tube **44**. Middle cover **46** can provide a softer contact surface for elastic tube **44** to reduce friction. Middle cover **46** can also be impregnated with a lubricant before assembly to provide additional wear protection for the elastic tube. Reinforcement covers **36** and **46** can be designed to expand and contract together such that outer cover **36** can support outer cover middle cover while expanding and contracting and when fully expanded. One way to do this is to provide reinforcement covers **36** and **46** with substantially the same yarn pitch when extended, so that they expand radially in proportion to each other and provide internal pressure support for each other throughout the expansion of the hose. Of course, the appropriate extended diameters of covers **36** and **46** can be used to allow them to support each other during use (middle cover 36 fitting snugly within outer cover **36** when extended). Outer cover **36** can also be designed to interact with middle cover **46** in such a way that encourages outer cover **36** to form evenly spaced and like-sized annular ridges **36r** along its length when the hose is retracted (e.g., by attaching outer cover **36** to middle cover **46** at locations which should be valleys in the pleated shape to be taken when the hose retracts), and provide a visually pleasing exterior surface for bungee hose **40**.

In **Fig. 3A-B**, bungee hose **50** can operate in substantially the same way that retractable bungee hoses **30** and **40** operate with a few differences. The addition of a plurality of wear resistant rings **39** helps stabilize the folding and unfolding (pleating and un-pleating) of hose cover **36** as bungee hose **50** extends and retracts. Thus, wear rings **39** also tend to hold cover **36** outward at approximately the diameter **D3** when retracted, but deforms when hose **50** is pressurized internally. This causes hose **50** to extend, outer cover **36** to unfold, and the diameter of cover **36** to shrink. If wear rings **39** are made of an elastic or pliable material, the diameter of rings **39** can be pulled to a significantly smaller diameter than diameter **D3** by outer cover **36**. This pulling on rings **39** by cover **36** is offset by and equal and opposite force that tends to lift rings **39** above the outer surface of cover **36** and help protect cover **36** from damage. In alternate designs, cover **36** and/or elastic tube **44** can also be impregnated with a lubricant before assembly to provide additional wear protection for the elastic tube. The lubricant can also facilitate retraction of the outer cover into a pleated shape by allowing it to more easily slide into the desired shape, and by making it less likely that various components will inadvertently bind to each other in a manner which would cause the outer cover to collapse in a different manner.

In **Fig. 4A-B**, bungee cords **60 and 63** can operate in substantially the same way as standard bungee cords, with hook ends **62** allowing them to attach to various places on vehicles to tie down items. The bungee cord itself, comprising pleated cover **36** and an elastic core (i.e., elastic tube **34** and elastic cord **64**) allow it to stretch to hold these items in place. Unlike typical bungee cords, the disclosed bungee cord can stretch to over six times its original length to wrap and hold objects that need securing.

In **Fig. 5A-B**, bungee hose **70** can operate in substantially the same way that retractable bungee hoses **30**, **40** and **50** operate, with a few differences. The hard melted portions **77**, according to the present invention, tend to give pleated cover **70** a very strong tendency to return to its original pleated position (see **Fig. 5A**) even after harsh use in an extended position like that seen in **Fig. 5B****.** Also, melted portions **77** can help to protect yarns **36a-b** from snagging on rough surfaces like concrete and brick. Melted portions **77** also allow braided cover **76** becomes nearly cylindrical when in use as seen in **Fig. 5B**, however melted portions **77** still remember their annular pleated position and ensure cover **76** returns to that pleated shape after use (see **Fig. 5A**).

In **Fig. 5A-B**, pleated cover **76** is shown operating as a cover for an extendible and retractable hose. The operation of cover **76** is substantially automatic when longitudinal extending and retracting forces are applied. These longitudinal forces come from internal forces or external forces, and can be provided by hose components and operational features including (but not limited to): an elastic tube, a hydraulic pressure differential between the interior and exterior of the hose, a coiled spring, an elastic cord, though other internal or external sources (e.g., a hose user, who could provide an external extending force by pulling on the hose) could also provide extending or retracting forces for the hose. A longitudinal compressive/retracting force tends to compress cover **76** into a series of annular pleats as seen on the left side of **Fig. 5A**. Longitudinal extending force (or tension force) tends to pull the pleats apart and extend cover **76** longitudinally as seen in **Fig. 5B****.** In **Fig. 5A-B**, pleated cover **76** is being used in extendible and retractable bungee hose **70** where the compressive force comes from the inner elastic tube **34.** Once stretched, elastic tube **34** has the potential to cause cover **76** to be compressed longitudinally to its retracted position seen in **Fig. 5A****.** When water pressure supplied to connector **22**, in combination with a flow restricting attachment (spray nozzle) attached to output connector **28**, the interior of elastic tube **34** is pressurized, generating an extending force that creates a tension between ends **22** and **28**. This extending force extends cover **76** and also provides a radially outward pressure to press cover **76** into a substantially cylindrical shape. The rings formed by melted portions **77** tend to hold their position during use, because some of the fibers are bonded together, which can also allow the rings to function as hard shapes that do not tend to slide pass each other easily. Thus, when water pressure is released from hose **70**, elastic tube **34** creates a net compressive force on pleated cover **76**, and the melted portions **77** tend to compress cover **76** back into its repeating series of annular pleats seen in **Fig. 5A**.

### RAMIFICATIONS, and SCOPE

The use of a radially expandable and longitudinally stretchable outer cover with an inner elastic tube significantly changes the dynamics of a retractable hose (bungee hose) and its operational characteristics. An outer cover such as disclosed herein can be implemented to facilitate stretching longitudinally and radially by orienting all the yarns that comprise the outer cover at an acute angle with respect to the longitudinal axis of the bungee hose (yarns oriented neither longitudinal nor tangential).

Although the above description contains many concrete examples, these should not be viewed as limiting the scope of the invention, as defined by the appended claims. Instead, the above description should be considered illustrative of some of the presently preferred approaches to implementing aspects of the inventor's technology. For example, many alternate solid and liquid lubricants can be used, and, in implementations where an outer cover is bonded to an inner elastic tube, many different ways of bonding can be used to achieve specific characteristics for a particular bungee hose. The choice of material for the inner elastic tube and the outer cover is very diverse and many natural and synthetic polymers can be used. Also, many additional combinations of outer cover, lubricants, inner elastic tube, and bonding methods are possible. Finally, while a hollow circular braided tube is the presently preferred structure for the outer cover of the bungee hose, many other knits, braid styles, and weaves can be substituted that provide a regular repeating pleated pattern and allows the hose to retract radially when extended longitudinally and expands radially when longitudinally retracted.

## Claims

1. A tube (34; 44) comprising a plurality of left-handed and right-handed fibers (36a; 36b) braided to form a channel (35) inside the tube (34; 44) and adapted to longitudinally extend from a compressed length to an extended length
in response to a longitudinal extension force, wherein:
a) the tube (34; 44) is adapted to, when contracting from its extended length to its compressed length, compress into a plurality of annular pleats, each annular pleat comprising an annular ridge (36r) and an annular valley (36v) and having an inner diameter which is greater at the annular ridge (36r) than at the annular valley (36v); and
b) for each annular pleat, the annular ridge (36r) from that annular pleat and the annular valley (36v) from that annular pleat are both centered around a longitudinal axis of the channel (35) inside the tube (34; 44);
wherein the tube (34; 44) is adapted to compress into the plurality of annular pleats based on the plurality of left-handed and right-handed fibers (36a; 36b) being heat set into a configuration comprising the plurality of annular pleats; **characterized in that** each annular ridge (36r) from the plurality of annular pleats comprises a plurality of areas (77) melted in the pleated configuration.

2. The tube of claim 1, wherein the plurality left-handed and right-handed fibers (36a; 36b) define a first pitch angle between about 5 to 20 degrees when the tube (34; 44) is at the compressed length.

3. The tube of claim 2, wherein the plurality left-handed and right-handed fibers (36a; 36b) define a second pitch angle of about 30 degrees when the tube (34; 44) is at the extended length.

4. The tube of claim 1, wherein the extended length is at least four times the compressed length.

5. The tube of claim 1, wherein the tube (34; 44) comprises a middle cover (46) disposed in the channel (35) inside the tube.

6. The tube of claim 5, wherein the middle cover (46) separates the left-handed and right-handed fibers (36a; 36b) braided to form the channel from an elastic core.

7. The tube of claim 1, wherein the fibers from the plurality of left-handed fibers (36a) and the plurality of right-handed fibers (36b) are yarns.

## Patentansprüche

1. Röhrenförmige Vorrichtung (34; 44) mit einer Mehrzahl links verlaufender und rechts verlaufender Fasern (36a; 36b), die geflochten sind, um einen Kanal (35) innerhalb der röhrenförmigen Vorrichtung (34; 44) zu bilden und die ausgestaltet ist, als Reaktion auf eine längs gerichtete Zugkraft von einer zusammengeschobenen Länge zu einer auseinandergezogenen Länge in Längsrichtung gestreckt zu werden, wobei
a) die röhrenförmige Vorrichtung (34; 44) ausgestaltet ist, wenn sie aus ihrer auseinandergezogenen Länge zu ihrer zusammengeschobenen Länge zusammengeschoben wird, um in eine Mehrzahl ringförmiger Falten zusammengeschoben zu werden, wobei jede ringförmige Falte einen ringförmigen Grat (36r) und ein ringförmiges Tal (36v) sowie einen Innendurchmesser aufweist, der am ringförmigen Grat (36r) größer ist als am ringförmigen Tal (36v); und
b) bei jeder ringförmigen Falte sowohl der ringförmige Grat (36r) dieser ringförmigen Falte als auch das ringförmige Tal (36v) dieser ringförmigen Falte um eine Längsachse des innerhalb der röhrenförmigen Vorrichtung (34; 44) angeordneten Kanals (35) zentriert sind;
wobei die röhrenförmige Vorrichtung (34; 44) ausgestaltet ist, um sich in die Mehrzahl ringförmiger Falten zusammenzuschieben, aufgrund der Mehrzahl links verlaufender und rechts verlaufender Fasern (36a; 36b), die in einer Struktur umfassend die Mehrzahl ringförmiger Falten thermisch fixiert sind;
**dadurch gekennzeichnet, dass**
jeder ringförmige Grat (36r) der Mehrzahl ringförmiger Falten eine Mehrzahl von in der gefältelten Struktur geschmolzenen Bereichen aufweist.

2. Röhrenförmige Vorrichtung nach Anspruch 1, wobei die Mehrzahl links verlaufender und rechts verlaufender Fasern (36a; 36b) einen ersten Steigungswinkel zwischen etwa 5 bis 20 Grad bildet, wenn die Vorrichtung (34; 44) ihre zusammengeschobene Länge aufweist.

3. Röhrenförmige Vorrichtung nach Anspruch 2, wobei die Mehrzahl links verlaufender und rechts verlaufender Fasern (36a; 36b) einen zweiten Steigungswinkel von etwa 30 Grad bildet, wenn die Vorrichtung (34; 44) ihre auseinandergezogene Länge aufweist.

4. Röhrenförmige Vorrichtung nach Anspruch 1, wobei die auseinandergezogene Länge mindestens das Vierfache der zusammengeschobenen Länge beträgt.

5. Röhrenförmige Vorrichtung nach Anspruch 1, wobei die Vorrichtung (34; 44) eine im Kanal (35) innerhalb der Vorrichtung angeordnete Ummantelung (46) aufweist.

6. Röhrenförmige Vorrichtung nach Anspruch 1, wobei die Ummantelung (46) die geflochtenen links verlaufenden und rechts verlaufenden Fasern (36a; 36b) trennt, um den Kanal aus einem elastischen Kern zu bilden.

7. Röhrenförmige Vorrichtung nach Anspruch 1, wobei die Fasern der Mehrzahl links verlaufender Fasern (36a) und rechts verlaufender Fasern (36b) als Garne ausgebildet sind.

## Revendications

1. Tube (34 ; 44) comprenant une pluralité de fibres gauches et droites (36a ; 36b) tressées pour former un canal (35) à l'intérieur du tube (34 ; 44) et adapté pour s'étendre longitudinalement d'une longueur comprimée à une longueur étendue
en réponse à une force d'extension longitudinale, dans lequel :
a) le tube (34 ; 44) est adapté pour, lors de sa contraction de sa longueur étendue à sa longueur comprimée, se comprimer en une pluralité de plis annulaires, chaque pli annulaire comprenant une arête annulaire (36r) et une vallée annulaire (36v) et ayant un diamètre intérieur qui est plus élevé au niveau de l'arête annulaire (36r) qu'au niveau de la vallée annulaire (36v) ; et
b) pour chaque pli annulaire, l'arête annulaire (36r) à partir de ce pli annulaire et la vallée annulaire (36v) à partir de ce pli annulaire sont toutes les deux centrées autour d'un axe longitudinal du canal (35) à l'intérieur du tube (34 ; 44) ;
dans lequel le tube (34 ; 44) est adapté pour se comprimer en la pluralité de plis annulaires sur la base de la pluralité de fibres gauches et droites (36a ; 36b) qui sont thermofixées dans une configuration comprenant la pluralité de plis annulaires ;
**caractérisé en ce que** chaque arête annulaire (36r) à partir de la pluralité de plis annulaires comprend une pluralité de zones (77) fusionnées dans la configuration plissée.

2. Tube selon la revendication 1, dans lequel la pluralité de fibres gauches et droites (36a ; 36b) définissent un premier angle de pas entre environ 5 et 20 degrés quand le tube (34 ; 44) est à la longueur comprimée.

3. Tube selon la revendication 2, dans lequel la pluralité de fibres gauches et droites (36a ; 36b) définissent un second angle de pas d'environ 30 degrés quand le tube (34 ; 44) est à la longueur étendue.

4. Tube selon la revendication 1, dans lequel la longueur étendue fait au moins quatre fois la longueur comprimée.

5. Tube selon la revendication 1, dans lequel le tube (34 ; 44) comprend un cache central (46) disposé dans le canal (35) à l'intérieur du tube.

6. Tube selon la revendication 5, dans lequel le cache central (46) sépare les fibres gauches et droites (36a ; 36b) tressées pour former le canal à partir d'un noyau élastique.

7. Tube selon la revendication 1, dans lequel les fibres issues de la pluralité de fibres gauches (36a) et de la pluralité de fibres droites (36b) sont des fils.
